# FASCICULE DE BREVET EUROPEEN

(11) **EP 3 819 074 B1**
(45) Date de publication et mention de la délivrance du brevet: **27.07.2022**
(21) Numéro de dépôt: 20202164.8
(22) Date de dépôt: 16.10.2020
(51) Int. Cl.: B23Q 3/08, B25B 11/00, F16J 15/02

(54) **OUTILLAGE À DÉPRESSION COMPRENANT AU MOINS UN JOINT D'ÉTANCHÉITÉ AMÉLIORÉ**
VAKUUMWERKZEUG, DAS MINDESTENS EINE VERBESSERTE DICHTUNGSFUGE UMFASST
TOOL WITH DEPRESSION COMPRISING AT LEAST ONE IMPROVED SEAL

(30) Priorité: 05.11.2019 FR 1912384
(43) Date de publication de la demande: 12.05.2021
(73) Titulaire: Airbus Operations SAS, 31060 Toulouse (FR)
(72) Inventeur: FORDOS, Nicolas, 31060 Toulouse (FR); ROUX, Corentin, 31060 Toulouse (FR); MARTINEAU, Jean-Claude, 31060 Toulouse (FR)
(74) Mandataire: Fantin, Laurent

(56) Documents cités:
- EP-A1- 0 604 339
- US-A- 5 687 975

## Description

La présente demande se rapporte à un outillage à dépression comprenant au moins un joint d'étanchéité amélioré.

Un tel outillage est connu du document EP 0 604 339 A1, sur lequel se base le préambule de la revendication 1.

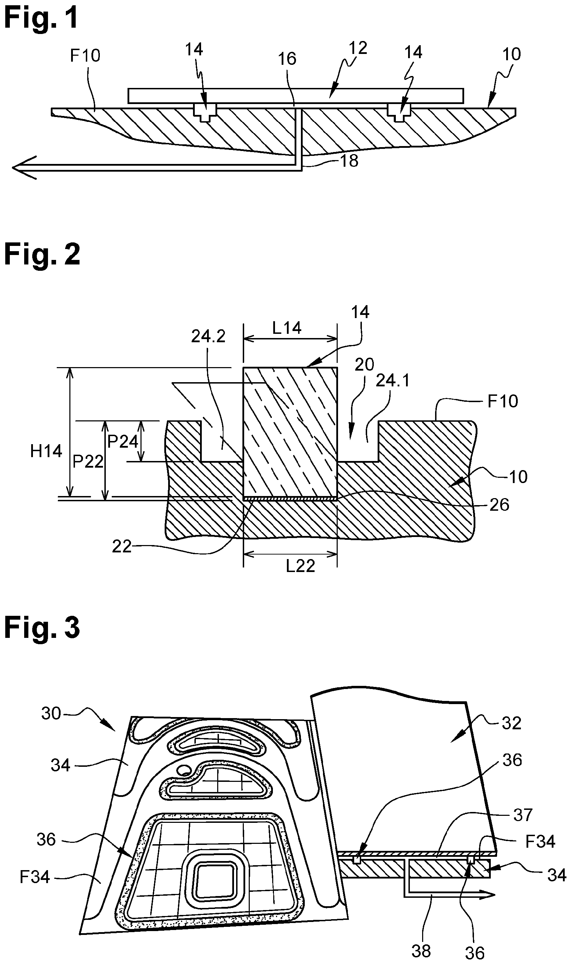

Selon un mode de réalisation visible sur la figure 1, un outillage à dépression 10, permettant de maintenir une pièce 12 immobile, comprend une surface d'appui F10 conformée comme la pièce 12 à immobiliser ainsi qu'un joint d'étanchéité 14 intercalé entre l'outillage à dépression 10 et la pièce 12. Ce joint d'étanchéité 14 décrit une boucle fermée de manière à délimiter, avec la surface d'appui F10 et la pièce 12, une cavité 16. L'outillage à dépression comprend également au moins un conduit 18 d'aspiration débouchant dans la cavité 16 et relié à un système d'aspiration configuré pour aspirer l'air dans la cavité 16.

Selon une configuration visible sur la figure 2, le joint d'étanchéité 14 comporte une section transversale rectangulaire présentant une hauteur H14 (dimension prise selon une direction perpendiculaire à la surface d'appui F10) et une largeur L14 (dimension prise selon une direction parallèle à la surface d'appui F10). Pour chaque joint d'étanchéité 14, l'outillage à dépression 10 comprend une gorge 20 configurée pour loger au moins partiellement le joint d'étanchéité 14. Cette gorge 20 comporte une rainure centrale 22 présentant une première profondeur P22, inférieure à la hauteur H14 du joint d'étanchéité 14, et une largeur L22, sensiblement égale à la largeur L14 du joint d'étanchéité 14, ainsi que deux dégagements 24.1, 24.2 disposés de part et d'autre de la rainure centrale 22 présentant une deuxième profondeur P24 inférieure à la première profondeur P22.

Afin que le joint reste en position dans la gorge 20, en particulier dans ses tronçons courbes, le joint d'étanchéité 14 est collé en utilisant une colle forte 26, bi-composant, intercalée entre le fond F22 de la rainure centrale 22 et le joint d'étanchéité 14.

En fonctionnement, le joint d'étanchéité 14 est comprimé et se déforme en occupant les deux dégagements 24.1, 24.2.

Lors d'une opération d'usinage, le liquide de coupe utilisé a tendance à s'écouler dans la gorge 20 et à imbiber le joint d'étanchéité 14. Il en résulte alors une détérioration prématurée des propriétés du joint d'étanchéité 14.

De plus, lorsqu'il est gorgé d'eau, le joint d'étanchéité 14 a tendance à mal s'écraser et à s'incliner (comme illustré en traits mixtes sur la figure 2), augmentant les risques de pincement du joint d'étanchéité 14, en dehors de la gorge 20, entre la surface d'appui F10 et la pièce 12. Ce pincement engendre également une détérioration prématurée du joint d'étanchéité 14.

La colle forte utilisée pour fixer le joint d'étanchéité étant très difficile à retirer, l'opération de changement du joint d'étanchéité est pénible et nécessite l'utilisation de produits chimiques pour totalement décaper le fond F22 de la rainure centrale 22, ce qui requiert un cycle de séchage long pour pouvoir de nouveau utiliser l'outillage à dépression.

La présente invention vise à remédier à tout ou partie des inconvénients de l'art antérieur. A cet effet, l'invention a pour objet un outillage à dépression configuré pour immobiliser une pièce, l'outillage à dépression comprenant une surface d'appui, au moins un joint d'étanchéité intercalé en fonctionnement entre la surface d'appui et la pièce ainsi qu'au moins une gorge, au niveau de la surface d'appui, configurée pour loger au moins partiellement le joint d'étanchéité, la gorge comprenant une rainure centrale présentant une paroi de fond principale et des parois latérales principales droite et gauche ainsi que des dégagements droit et gauche, disposés de part et d'autre de la rainure centrale, présentant chacun une paroi de fond secondaire et une paroi latérale secondaire droite ou gauche, le joint d'étanchéité comprenant une partie inférieure coopérant avec la rainure centrale et une partie supérieure en contact avec la pièce en fonctionnement.

Selon l'invention, le joint d'étanchéité comprend des ailettes droite et gauche, intercalées entre ses parties inférieure et supérieure, s'étendant de part et d'autre de la partie inférieure et se logeant respectivement dans les dégagements droit et gauche.

Cette géométrie améliore le maintien du joint d'étanchéité dans la gorge, plus particulièrement au niveau des tronçons courbes de la gorge, si bien qu'il n'est plus nécessaire d'utiliser de la colle forte pour le fixer dans la gorge.

Selon une autre caractéristique, chaque ailette droite ou gauche comprend une face inférieure, une face supérieure ainsi qu'une face d'extrémité. Chacune des ailettes droite et gauche a une largeur sensiblement égale à la largeur du dégagement droit ou gauche qui la reçoit, les faces inférieure et d'extrémité de l'ailette droite étant plaquées respectivement contre les parois de fond secondaire et latérale secondaire du dégagement droit, les faces inférieure et d'extrémité de l'ailette gauche étant respectivement plaquées contre les parois de fond secondaire et latérale secondaire du dégagement gauche.

Selon une autre caractéristique, chaque face d'extrémité des ailettes droite et gauche présente une hauteur inférieure ou égale à la moitié de la profondeur des dégagements droit et gauche.

Selon une autre caractéristique, la partie supérieure du joint d'étanchéité comprend un sommet présentant une forme courbe en arc de cercle.

Selon une autre caractéristique, l'arc de cercle a un rayon compris entre 3 et 6 mm.

Selon une autre caractéristique, la partie supérieure présente une largeur maximale inférieure ou égale à la largeur de la partie inférieure diminuant progressivement jusqu'au sommet.

Selon une autre caractéristique, le joint d'étanchéité comprend un évidement longitudinal. Selon une autre caractéristique, l'évidement longitudinal est positionné entre les deux ailettes, au moins en partie dans la partie inférieure du joint d'étanchéité.

Selon une autre caractéristique, l'évidement longitudinal a une section transversale circulaire et présente un diamètre sensiblement identique à celui de l'arc de cercle du sommet de la partie supérieure.

Selon une autre caractéristique, le joint d'étanchéité est un élastomère de type chloroprène. D'autres caractéristiques et avantages ressortiront de la description de l'invention qui va suivre, description donnée à titre d'exemple uniquement, en regard des dessins annexés parmi lesquels :
- La figure 1 est un schéma d'un outillage à dépression illustrant un mode de réalisation de l'art antérieur,
- La figure 2 est une coupe transversale d'une gorge et d'un joint d'étanchéité illustrant un mode de réalisation de l'art antérieur,
- La figure 3 est une vue en perspective avec une coupe partielle d'un outillage à dépression illustrant un mode de réalisation de l'invention,

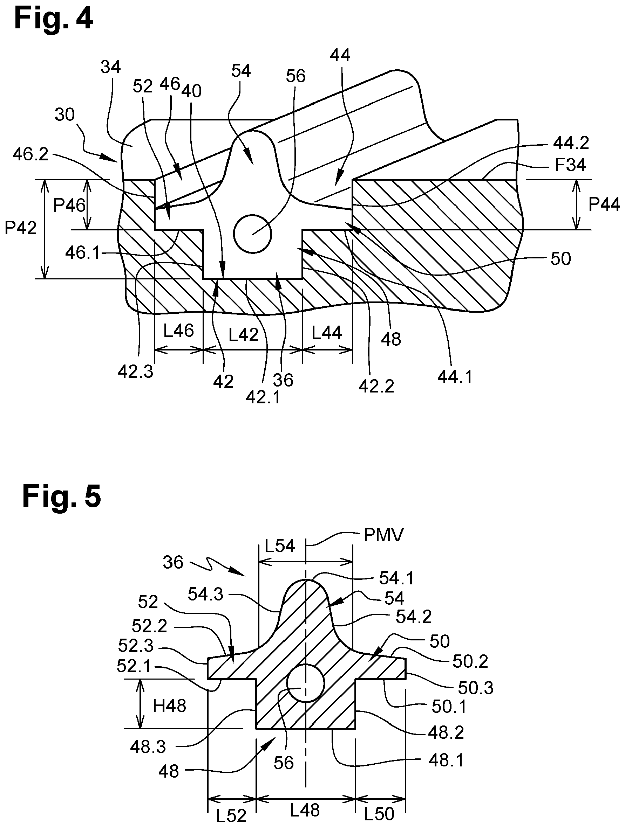

- La figure 4 est une coupe transversale d'une partie d'un outillage à dépression illustrant un mode de réalisation de l'invention,
- La figure 5 est une coupe transversale d'un joint d'étanchéité illustrant un mode de réalisation de l'invention,

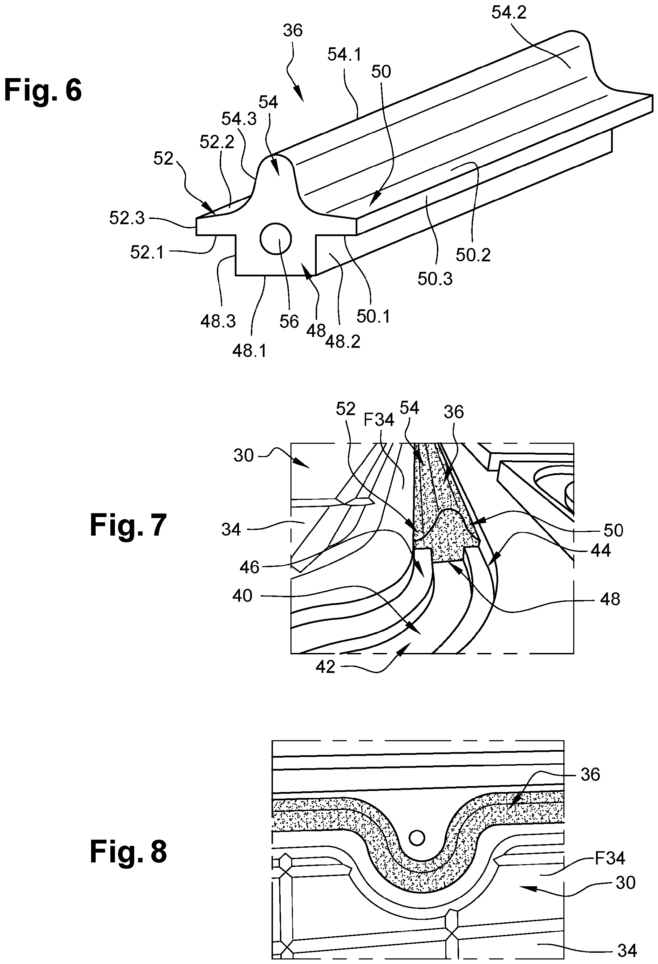

- La figure 6 est une vue en perspective d'un tronçon d'un joint d'étanchéité illustrant un mode de réalisation de l'invention,
- La figure 7 est une vue en perspective d'une partie d'un outillage à dépression équipé du joint d'étanchéité visible sur les figures 5 et 6, et
- La figure 8 est une vue de dessus d'une partie d'un outillage à dépression équipé du joint d'étanchéité visible sur les figures 5 et 6.

Sur la figure 3, on a représenté un outillage à dépression 30 sur lequel est maintenue immobile au moins une pièce 32. Selon une application, un tel outillage à dépression 30 est utilisé pour usiner (détourer, percer, surfacer, fraiser,..) une pièce 32 en matériau composite sous la forme d'une plaque, comme un panneau d'un fuselage d'un aéronef. Bien entendu, l'invention n'est pas limitée à cette application.

L'outillage à dépression 30 peut comprendre plusieurs plateaux 34 articulés entre eux pour s'adapter à la courbure de la pièce 32 à immobiliser.

L'outillage à dépression 30 comprend au moins un plateau 34 présentant une surface d'appui F34, orientée vers la pièce 32 en fonctionnement, ainsi qu'au moins un joint d'étanchéité 36 intercalé en fonctionnement entre la surface d'appui F34 et la pièce 32. Ce joint d'étanchéité 36 délimite avec le plateau 34 et la pièce 32 une cavité 37. L'outillage à dépression 30 comprend également au moins un conduit 38 d'aspiration débouchant dans la cavité 37 et relié à un système d'aspiration (non représenté) configuré pour aspirer l'air dans la cavité 37.

Le plateau 34 comprend au moins une gorge 40, en creux par rapport à la surface d'appui F34, décrivant une boucle fermée et configurée pour loger au moins partiellement un joint d'étanchéité 36. Pour la présente demande, on entend par un joint d'étanchéité 36 un unique joint d'étanchéité ou plusieurs joints d'étanchéité mis bout à bout.

Cette gorge 40 comporte une rainure centrale 42, présentant une paroi de fond principale 42.1 et des parois latérales principales droite et gauche 42.2, 42.3, ainsi que des dégagements droit et gauche 44, 46, disposés de part et d'autre de la rainure centrale 42, présentant chacun une paroi de fond secondaire 44.1, 46.1 et une paroi latérale secondaire droite ou gauche 44.2, 46.2.

Selon une configuration, les dégagements droit et gauche 44, 46 sont symétriques par rapport à la rainure centrale 42. Les parois latérales principales droite et gauche 42.2, 42.3 sont approximativement perpendiculaires à la paroi de fond principale 42.1. La rainure centrale 42 présente une largeur L42, correspondant à la distance séparant les parois latérales principales droite et gauche 42.2, 42.3, et une profondeur P42 correspondant à la distance séparant la paroi de fond principale 42.1 et la surface d'appui F34. Les dégagements droit et gauche 44, 46 ont sensiblement la même profondeur P44, P46, inférieure à la profondeur P42 de la rainure centrale 42, et ont la même largeur L44, L46 correspondant à la distance séparant la paroi latérale principale droite 42.2 (respectivement gauche 42.3) et la paroi latérale secondaire droite 44.2 (respectivement gauche 46.2).

A l'exception du ou des joint(s) d'étanchéité 36, les autres éléments de l'outillage à dépression ne sont pas plus décrits car ils peuvent être identiques à ceux de l'art antérieur.

Le joint d'étanchéité 36 présente une section transversale, sensiblement constante sur sa longueur, qui comprend une partie inférieure 48 coopérant avec la rainure centrale 42, une partie supérieure 54 en contact avec la pièce 32 en fonctionnement ainsi que des ailettes droite et gauche 50, 52, intercalées entre les parties inférieure et supérieure 48, 54, s'étendant de part et d'autre de la partie inférieure 48 et se logeant respectivement dans les dégagements droit et gauche 44, 46.

Selon un mode de réalisation, la section transversale du joint d'étanchéité 36 est symétrique par rapport à un plan médian vertical PMV du joint d'étanchéité 36.

La partie inférieure 48 présente une base 48.1 ainsi que des faces latérales droite et gauche 48.2, 48.3. La partie inférieure 48 présente une largeur L48 (distance séparant les faces latérales droite et gauche 48.2, 48.3) sensiblement égale à la largeur L42 de la rainure centrale 42 de la gorge 30. La partie inférieure 48 présente une hauteur H48, correspondant à la distance séparant la base 48 et les ailettes droite et gauche 50, 52, sensiblement égale à la distance séparant la paroi de fond principale 42.1 et les parois de fond secondaires 44.1, 46.1.

Ainsi, lorsque le joint d'étanchéité 46 est positionné dans la gorge 30, la partie inférieure 48 du joint d'étanchéité 36 comble la rainure principale 42, la base 48.1, les faces latérales droite et gauche 48.2, 48.3 de la partie inférieure 48 étant en contact respectivement avec la paroi de fond principale 42.1, les parois latérales principales droite et gauche 42.2, 42.3 de la rainure centrale 42.

Chaque ailette droite ou gauche 50, 52 comprend une face inférieure 50.1, 52.1, une face supérieure 50.2, 52.2 ainsi qu'une face d'extrémité 50.3, 52.3.

Selon une particularité de l'invention, chacune des ailettes droite et gauche 50, 52 a une largeur L50, L52 sensiblement égale à la largeur du dégagement droit ou gauche 44, 46 qui la reçoit. Ainsi, en fonctionnement, les faces inférieure et d'extrémité 50.1, 50.3 de l'ailette droite 50 sont plaquées respectivement contre les parois de fond secondaire et latérale secondaire 44.1, 44.2 du dégagement droit 44. En complément, les faces inférieure et d'extrémité 52.1, 52.3 de l'ailette gauche 52 sont respectivement plaquées contre les parois de fond secondaire et latérale secondaire 46.1, 46.2 du dégagement gauche 46.

Ces deux ailettes droite et gauche 50, 52, ajustées aux dégagements droit et gauche 44, 46, permettent de maintenir le joint d'étanchéité 36 dans la gorge 40, notamment dans ses tronçons courbes, si bien qu'il n'est plus nécessaire de coller le joint d'étanchéité 36 avec une colle forte pour le maintenir dans la gorge 40.

Ainsi, le joint d'étanchéité 36 peut être enlevé aisément en vue de le remplacer, sans devoir nettoyer la gorge 40 avec des produits chimiques.

Si nécessaire, un adhésif avec une capacité d'adhérence moindre que la colle forte, bi-composant, de l'art antérieur peut être utilisé pour améliorer le maintien du joint d'étanchéité 36 dans la gorge 40. Cet adhésif peut être positionné sur le joint d'étanchéité 36, au niveau des faces inférieures 50.1, 52.1 des ailettes droite et gauche 50, 52 et/ou de la base 48.1 et/ou des faces latérales droite et gauche 48.2, 48.3 de la partie inférieure 48. Cet adhésif est configuré pour rester fixé sur le joint d'étanchéité 36 lors de son retrait.

Selon un mode de réalisation, chaque face d'extrémité 50.3, 52.3 présente une hauteur inférieure ou égale à la moitié de la profondeur P44, P46 des dégagements droit et gauche 44, 46.

Le fait que les ailettes droite et gauche 50, 52 comblent, au moins partiellement, les dégagements droit et gauche 44, 46 permet de limiter l'accumulation de liquides dans la gorge 30.

Selon une configuration, la partie supérieure 54 du joint d'étanchéité 36 comprend un sommet 54.1 qui présente une forme courbe en arc de cercle. Selon un mode de réalisation, l'arc de cercle a un rayon compris entre 3 et 6 mm.

Le fait que la partie supérieure 54 présente un sommet 54.1 en arc de cercle en contact avec la pièce 32 en fonctionnement permet d'obtenir un contact sensiblement linéaire entre le joint d'étanchéité 36 et la pièce 32. La surface de contact avec la pièce 32 étant réduite par rapport à l'art antérieur, cela permet d'obtenir un écrasement plus important de la partie supérieure 54, à effort constant, et donc un meilleur contact entre la pièce 32 et le joint d'étanchéité 36, facilitant l'amorçage de la mise en dépression de la cavité 37.

La partie supérieure 54 présente, de part et d'autre de son sommet 54.1, des flancs droit et gauche 54.2, 54.3 prolongés par les faces supérieures 50.2, 52.2 des ailettes droite et gauche 50, 52.

Selon une configuration, la partie supérieure 54 présente une largeur maximale L54 inférieure ou égale à la largeur L48 de la partie inférieure 48, cette largeur L54 diminuant progressivement jusqu'au sommet 54.1. Globalement, la partie supérieure 54 a une largeur inférieure à celle de la partie inférieure 48 d'un joint d'étanchéité 36 de l'art antérieur, facilitant la courbure du joint d'étanchéité 36 dans les tronçons courbes de la gorge 40.

Le sommet 54.1 de la partie supérieure 54 étant en arc de cercle et sa largeur L54 étant inférieure ou égale à celle de la partie inférieure 48, les risques de pincement du joint 36 entre la pièce 32 et le plateau 34 en dehors de la gorge 40 sont limités. Ainsi, lors de son écrasement, le joint d'étanchéité 36 est forcément contenu dans la gorge 40.

Selon un mode de réalisation, le joint d'étanchéité 36 comprend un évidement longitudinal 56 qui s'étend sur toute sa longueur. Selon une configuration, cet évidement longitudinal 56 a une section circulaire. Il est positionné entre les deux ailettes 50, 52, de manière symétrique par rapport au plan médian vertical PMV, au moins en partie dans la partie inférieure 48 du joint d'étanchéité. Cet évidement longitudinal 56 facilite la compression du joint d'étanchéité 36.

Selon un mode de réalisation, l'évidement longitudinal 56 présente un diamètre sensiblement identique à celui de l'arc de cercle du sommet 54.1. La partie inférieure 48 présente une largeur L48 sensiblement égale au double de sa hauteur H48. La hauteur H48 de la partie inférieure 48 est sensiblement égale à la largeur L50, L52 des ailettes 50, 52. A l'état non déformé, environ le tiers supérieur du joint d'étanchéité 36 est positionné à l'extérieur de la gorge 40. En fonctionnement, lorsque le joint d'étanchéité 36 est comprimé, la quasi-totalité de sa section est positionnée dans la gorge 40.

Selon un mode de réalisation, le joint d'étanchéité 36 est un élastomère de type chloroprène.

Le joint d'étanchéité 36 de l'invention peut être positionné dans les gorges des outillages à dépression existants en lieu et place des joints d'étanchéité de l'art antérieur.

## Revendications

1. Outillage à dépression configuré pour immobiliser une pièce (32), l'outillage à dépression comprenant une surface d'appui (F34), au moins un joint d'étanchéité (36) intercalé en fonctionnement entre la surface d'appui (F34) et la pièce (32) ainsi qu'au moins une gorge (40), au niveau de la surface d'appui (F34), configurée pour loger au moins partiellement le joint d'étanchéité (36), la gorge (40) comprenant une rainure centrale (42) présentant une paroi de fond principale (42.1) et des parois latérales principales droite et gauche (42.2, 42.3) ainsi que des dégagements droit et gauche (44, 46), disposés de part et d'autre de la rainure centrale (42), présentant chacun une paroi de fond secondaire (44.1, 46.1) et une paroi latérale secondaire droite ou gauche (44.2, 46.2), le joint d'étanchéité (36) comprenant une partie inférieure (48) coopérant avec la rainure centrale (42) et une partie supérieure (54) en contact avec la pièce (32) en fonctionnement, **caractérisé en ce que** le joint d'étanchéité (36) comprend des ailettes droite et gauche (50, 52) , intercalées entre les parties inférieure et supérieure (48, 54), s'étendant de part et d'autre de la partie inférieure (48) et se logeant respectivement dans les dégagements droit et gauche (44, 46).

2. Outillage à dépression selon la revendication 1, **caractérisé en ce que** chaque ailette droite ou gauche (50, 52) comprend une face inférieure (50.1, 52.1), une face supérieure (50.2, 52.2) ainsi qu'une face d'extrémité (50.3, 52.3) et **en ce que** chacune des ailettes droite et gauche (50, 52) a une largeur (L50, L52) sensiblement égale à la largeur du dégagement droit ou gauche (44, 46) qui la reçoit, les faces inférieure et d'extrémité (50.1, 50.3) de l'ailette droite (50) étant plaquées respectivement contre les parois de fond secondaire et latérale secondaire (44.1, 44.2) du dégagement droit (44), les faces inférieure et d'extrémité (52.1, 52.3) de l'ailette gauche (52) étant respectivement plaquées contre les parois de fond secondaire et latérale secondaire (46.1, 46.2) du dégagement gauche (46).

3. Outillage à dépression selon la revendication 2, **caractérisé en ce que** chaque face d'extrémité (50.3, 52.3) des ailettes droite et gauche (50, 52) présente une hauteur inférieure ou égale à la moitié de la profondeur (P44, P46) des dégagements droit et gauche (44, 46).

4. Outillage à dépression selon l'une des revendications précédentes, **caractérisé en ce que** la partie supérieure (54) du joint d'étanchéité (36) comprend un sommet (54.1) présentant une forme courbe en arc de cercle.

5. Outillage à dépression selon la revendication précédente, **caractérisé en ce que** l'arc de cercle a un rayon compris entre 3 et 6 mm.

6. Outillage à dépression selon l'une des revendications précédentes, **caractérisé en ce que** la partie supérieure (54) présente une largeur maximale (L54) inférieure ou égale à la largeur (L48) de la partie inférieure (48) diminuant progressivement jusqu'au sommet (54.1).

7. Outillage à dépression selon l'une des revendications précédentes, **caractérisé en ce que** le joint d'étanchéité (36) comprend un évidement longitudinal (56).

8. Outillage à dépression selon la revendication précédente, **caractérisé en ce que** l'évidement longitudinal (56) est positionné entre les deux ailettes (50, 52), au moins en partie dans la partie inférieure (48) du joint d'étanchéité.

9. Outillage à dépression selon les revendications 4 et 7, **caractérisé en ce que** l'évidement longitudinal (56) a une section transversale circulaire et présente un diamètre sensiblement identique à celui de l'arc de cercle du sommet (54.1) de la partie supérieure (54).

10. Outillage à dépression selon l'une des revendications précédentes, **caractérisé en ce que** le joint d'étanchéité (36) est un élastomère de type chloroprène.

## Patentansprüche

1. Unterdruckwerkzeug, das zum Festhalten eines Werkstücks (32) eingerichtet ist, wobei das Unterdruckwerkzeug eine Auflagefläche (F34), wenigstens eine Dichtung (36), die im Betrieb zwischen der Auflagefläche (F34) und dem Werkstück (32) angeordnet ist, sowie wenigstens eine Vertiefung (40) im Bereich der Auflagefläche (F34) umfasst, die zum zumindest teilweisen Aufnehmen der Dichtung (36) eingerichtet ist, wobei die Vertiefung (40) eine zentrale Nut (42) mit einer Hauptbodenwand (42.1) und einer rechten und linken Hauptseitenwand (42.2, 42.3) sowie rechte und linke Aussparungen (44, 46) umfasst, die beidseits der zentralen Nut (42) angeordnet sind und jeweils eine sekundäre Bodenwand (44.1, 46.1) und eine rechte oder linke sekundäre Seitenwand (44.2, 46.2) aufweisen, wobei die Dichtung (36) einen unteren Abschnitt (48), der mit der zentralen Nut (42) zusammenwirkt, und einen oberen Abschnitt (54) aufweist, der im Betrieb mit dem Werkstück (32) in Kontakt steht, **dadurch gekennzeichnet, dass** die Dichtung (36) rechte und linke Flügel (50, 52) aufweist, die zwischen dem unteren und dem oberen Abschnitt (48, 54) angeordnet sind, die sich beidseits des unteren Abschnitts (48) erstrecken und die jeweils in die rechte und linke Aussparungen (44, 46) aufgenommen sind.

2. Unterdruckwerkzeug nach Anspruch 1, **dadurch gekennzeichnet, dass** der rechte oder linke Flügel (50, 52) jeweils eine Unterseite (50.1, 52.1), eine Oberseite (50.2, 52.2) sowie eine Endseite (50.3, 52.3) umfasst und dass der rechte und linke Flügel (50, 52) jeweils eine Breite (L50, L52) aufweist, die im Wesentlichen gleich der Breite der rechten oder linken Aussparung (44, 46) ist, die ihn aufnimmt, wobei die Unter- und Endseite (50.1, 50.3) des rechten Flügels (50) jeweils gegen die sekundäre Boden- und sekundäre Seitenwand (44.1, 44.2) der rechten Aussparung (44) gedrückt sind und wobei die Unter- und Endseite (52.1, 52.3) des linken Flügels (52) jeweils gegen die sekundäre Boden- und sekundäre Seitenwand (46.1, 46.2) der linken Aussparung (46) gedrückt sind.

3. Unterdruckwerkzeug nach Anspruch 2, **dadurch gekennzeichnet, dass** die Endfläche (50.3, 52.3) des rechten und linken Flügels (50, 52) jeweils eine Höhe aufweist, die kleiner oder gleich der Hälfte der Tiefe (P44, P46) der rechten und linken Aussparung (44, 46) ist.

4. Unterdruckwerkzeug nach einem der vorhergehenden Ansprüche, **dadurch gekennzeichnet, dass** der obere Abschnitt (54) der Dichtung (36) einen Scheitelpunkt (54.1) mit einer gekrümmten, kreisbogenförmigen Form aufweist.

5. Unterdruckwerkzeug nach dem vorhergehenden Anspruch, **dadurch gekennzeichnet, dass** der Kreisbogen einen Radius zwischen 3 und 6 mm hat.

6. Unterdruckwerkzeug nach einem der vorhergehenden Ansprüche, **dadurch gekennzeichnet, dass** der obere Abschnitt (54) eine maximale Breite (L54) aufweist, die kleiner oder gleich der Breite (L48) des unteren Abschnitts (48) ist und die bis zum Scheitelpunkt (54.1) allmählich abnimmt.

7. Unterdruckwerkzeug nach einem der vorhergehenden Ansprüche, **dadurch gekennzeichnet, dass** die Dichtung (36) eine längsgerichtete Ausnehmung (56) aufweist.

8. Unterdruckwerkzeug nach dem vorhergehenden Anspruch, **dadurch gekennzeichnet, dass** die längsgerichtete Ausnehmung (56) zwischen den beiden Flügeln (50, 52) zumindest teilweise im unteren Abschnitt (48) der Dichtung angeordnet ist.

9. Unterdruckwerkzeug nach Anspruch 4 und 7, **dadurch gekennzeichnet, dass** die längsgerichtete Ausnehmung (56) einen kreisförmigen Querschnitt hat und einen Durchmesser aufweist, der im Wesentlichen dem Durchmesser des Kreisbogens des Scheitels (54.1) des oberen Abschnitts (54) entspricht.

10. Unterdruckwerkzeug nach einem der vorhergehenden Ansprüche, **dadurch gekennzeichnet, dass** die Dichtung (36) ein Elastomer vom Chloroprentyp ist.

## Claims

1. A vacuum tool designed to immobilize a part (32), the vacuum tool comprising a bearing surface (F34), at least one sealing gasket (36) that is interposed when in operation between the bearing surface (F34) and the part (32) and at least one groove (40) in the bearing surface (F34) that is designed to at least partially receive the sealing gasket (36), the groove (40) having a central slot (42) having a main bottom wall (42.1) and main right- and left-hand side walls (42.2, 42.3) as well as right- and left-hand gaps (44, 46) that are arranged on either side of the central slot (42), each having a secondary bottom wall (44.1, 46.1) and a right- or left-hand secondary side wall (44.2, 46.2), the sealing gasket (36) having a lower portion (48) that cooperates with the central slot (42) and an upper portion (54) that is in contact with the part (32) when in operation, **characterized in that** the sealing gasket (36) has right- and left-hand flanges (50, 52) that are interposed between the lower and upper portions (48, 54), that extend on either side of the lower portion (48), and that are seated respectively in the right and left hand gaps (44, 46).

2. The vacuum tool as claimed in claim 1, **characterized in that** each right- or left-hand flange (50, 52) has a lower face (50.1, 52.1), an upper face (50.2, 52.2), and an end face (50.3, 52.3), and **in that** the width (L50, L52) of each of the right- and left-hand flanges (50, 52) is substantially equal to the width of the right- or left-hand gap (44, 46) receiving the respective flange, the lower and end faces (50.1, 50.3) of the right-hand flange (50) being pressed respectively against the secondary bottom and secondary side walls (44.1, 44.2) of the right-hand gap (44), the lower and end faces (52.1, 52.3) of the left-hand flange (52) being respectively pressed against the secondary bottom and secondary side walls (46.1, 46.2) of the left-hand gap (46).

3. The vacuum tool as claimed in claim 2, **characterized in that** the height of each end face (50.3, 52.3) of the right- and left-hand flanges (50, 52) is equal to or less than half of the depth (P44, P46) of the right- and left-hand gaps (44, 46).

4. The vacuum tool as claimed in one of the preceding claims, **characterized in that** the upper portion (54) of the sealing gasket (36) has an apex (54.1) with a curved circular arc shape.

5. The vacuum tool as claimed in the preceding claim, **characterized in that** the radius of the circular arc is between 3 mm and 6 mm.

6. The vacuum tool as claimed in one of the preceding claims, **characterized in that** the maximum width (L54) of the upper portion (54) is equal to or less than the width (L48) of the lower portion (48) diminishing gradually towards the apex (54.1).

7. The vacuum tool as claimed in one of the preceding claims, **characterized in that** the sealing gasket (36) has a longitudinal recess (56).

8. The vacuum tool as claimed in one of the preceding claims, **characterized in that** the longitudinal recess (56) is positioned between the two flanges (50, 52), at least partially inside the lower portion (48) of the sealing gasket.

9. The vacuum tool as claimed in claims 4 and 7, **characterized in that** the longitudinal recess (56) has a circular cross section and a diameter substantially equal to the diameter of the circular arc of the apex (54.1) of the upper portion (54).

10. The vacuum tool as claimed in one of the preceding claims, **characterized in that** the sealing gasket (36) is made of a chloroprene elastomer.
